# EUROPEAN PATENT APPLICATION

(11) **EP 1 344 457 A1**
(43) Date of publication of application: **17.09.2003**
(21) Application number: 02388022.2
(22) Date of filing: 14.03.2002
(51) Int. Cl.: A21C 15/02

(54) **A method of and an apparatus for producing sandwich cookies**

(71) Applicant: Meincke A/S, 2740 Skovlunde (DK)
(72) Inventor: Henrichs, Holger, 3500 Vaerlose (DK)
(74) Representative: Jorgensen, Bjorn Barker

(57) **Abstract**

The apparatus comprises a feeding device (1, 4, 5) for a row (3) of cookies (2) having an upwards or downwards facing bottom, an indexing device (6) transferring the cookies arranged in order to a depositor conveyor (8) for bringing the cookies past a depositor device (9, 10) for applying a material to at least some of the cookies (2a), and means (11) for placing some of the cookies on top of other cookies, to which a material has been applied, to form sandwich cookies. The indexing device (6) is adapted to turn some of the cookies (2a) and let other cookies (2b) pass without being turned in such a manner that the cookies (2a), which are intended to be at the bottom of a sandwich, leave the indexing device upside down and the cookies (2b), which are intended to be on top of a sandwich, leave the indexing device bottom down.

## Description

The invention relates to a method for the manufacture of sandwich cookies comprising a number of preferably identical cookies placed on top of each other with a material in between, in which a row of cookies are advanced with an upwards or downwards facing bottom to an indexing device, which transfers the cookies arranged in order to a depositor conveyor which conveys the cookies past a depositor device, which applies a material to at least some of the cookies, following which some of the cookies are placed on top of other cookies, to which a material has been applied, in order to form sandwich cookies.

The invention further relates to an apparatus for the manufacture of sandwich cookies by means of a number of preferably identical cookies placed on top of each other with a material in between, comprising a feeding device for a row of cookies having an upwards or downwards facing bottom, an indexing device transferring the cookies in arranged order to a depositor conveyor for bringing the cookies past a depositor device for applying a material to at least some of the cookies, and means for placing some of the cookies on top of other cookies, to which a material has been applied, to form sandwich cookies.

A method and an apparatus of the above-mentioned type is known from WO-A-00 01240, which describes a machine comprising a chain assembly conveying cookies past a depositing device, which applies a material to every second cookie, and subsequently to a capper wheel, which in V-shaped recesses lifts the cookies, to which no material has been applied, and advances them through a vertical path and puts each of them on a cookie, on which material has been deposited. The cookies thus placed are thereby turned. It is therefore necessary that all cookies, when introduced into the machine, are lying upside down in order to enable the finished joined sandwich cookies to appear with the outwards facing upper side both at the top and at the bottom, which is usual practice. WO-A-00 01240 does not mention such an upside/down-orientation of the cookies. Devices turning all cookies in a row of cookies are known, see for instance US-A-4 622 891 discussed below.

US-A-2 993 453 describes a machine for the manufacture of sandwich cookies, in which cookies are taken from the bottom of a storage pile to a belt, pass a depositing device and then pass below another storage pile, from where a superjacent cookie is dispensed. The cookies will then lie turned as desired in the storage piles, and further turning is not performed.

US-A-4 329 920 describes a similar machine, but in this case the cookies are turned before being removed from the first storage pile, in which manner it becomes possible to fill both storage piles with cookies, the upper side of which faces upwards, which facilitates the manufacture of cookies in general.

US-A-3 783 772 and 4 513 656 describe a machine, which is to a high degree similar to the apparatus disclosed in the above-mentioned WO-A-00 01240, but the apparatus is provided with a different mechanism for placing cookies without material applied on cookies with material applied, this mechanism comprising a lifting device for lifting a cookie onto a belt engaging the cookie, taking it backwards through a vertical path and putting it on top of another cookie.

US-A-4 114 524 describes a sandwich making machine, in which cookies are conveyed on a belt; the cookies, to which a material is to be applied, are guided around the end of the belt, whereby they are turned upside down, and advance further on a belt positioned at a lower level past a depositor device, while the remaining cookies are guided to a third belt, up past the depositor device and further on to be joined with the cookies, to which material has been applied.

US-A-4 622 891 describes a machine, in which two rows of cookies are guided in parallel into the machine, guided to their respective levels and in over each other. The lower cookies are turned by means of a turning wheel with deep V-shaped recesses, provided with material, and joined with the upper cookies.

It is generally known from the above publications to use narrow bars and belts as slides and conveyors, respectively. Narrow contact surfaces for the cookies are obtained, and such bars and belts may overlap one another in such a manner that a smooth transition from one conveyor to the other is obtained. Likewise, turning wheels may be designed as a small disc or several parallel, narrow discs, whereby stationary guiding members or conveyor belts or straps may overlap the turning wheel.

The object of the present invention is to provide a method and an apparatus of the types mentioned by way of introduction, said method and apparatus making a flexible operation possible.

The object is met by a method which is characterized in that that the indexing device turns some of the cookies and leaves some of the other cookies to pass without being turned in such a manner that the cookies, which are intended to be positioned at the bottom of a sandwich, leave the indexing device upside down, and the cookies intended to be at the top of a sandwich leave the indexing device bottom down. By designing the indexing device with a view to turning the cookies according to wish, it becomes possible to use the apparatus for other purposes than manufacture of sandwich cookies comprising two joined cookies. Furthermore is obtained that no further turning of the cookies is needed.

By indexing device is to be understood a device conveying cookies further on in the apparatus with a desired timing and consequently at the desired intervals.

By cookie (base cake) is to be understood any piece of pastry or piece of sugar/chocolate confectionery, which has a top side and a bottom side differing therefrom, and which may be used for being joined with a corresponding piece of pastry or confectionery, including cookies, crackers, etc. with a material in between, in particular custard, icing, jelly etc.

In a preferred embodiment the indexing device receives a flow of cookies in a row, which is advanced by a limited force, and the indexing device lifts the arriving cookies one by one and take them through a curved path to a receiving conveyor in the form of a slide or a running conveyor for further transportation. The cookies are engaged preferably on the receiving conveyor by indexing carriers, which adjust the positioning of the cookies on the depositor conveyor. In this manner, the cookies may be conveyed unarranged as regards timing to the indexing device.

In a practical embodiment of the method according to the invention a cookie, which is to be placed on top of another cookie, is lifted from a joining conveyor and taken in its transport direction to a path superjacent the joining conveyor and is engaged by a joining carrier, which also engages a succeeding cookie, to which material has been applied, whereby these two cookies are advanced vertically above one another to the end of the superjacent path, where the upper one of the two cookies falls down unto the subjacent one.

An apparatus according to the invention is characterized in that the indexing device is adapted to turn some of the cookies and let other cookies pass without being turned in such a manner that the cookies, which are intended to be at the bottom of a sandwich, leave the indexing device upside down and the cookies, which are intended to be on top of a sandwich, leave the indexing device bottom down.

In a preferred embodiment the indexing device comprises a turning wheel with an axis of rotation and a direction of rotation and peripheral recesses comprising a number of first recesses for receiving cookies, whereby said cookies are turned, and a number of recesses for receiving cookies, whereby said cookies are not turned, but pass the turning wheel orientated as when they were received. The recesses turning the cookies are comparatively deep, and the recesses not turning the cookies are correspondingly comparatively shallow.

In a practical embodiment the turning recesses are V-shaped, seen in a plane perpendicular to the axis of rotation, and have an acute bottom angle.

In a practical embodiment the recesses, which do not turn the cookies, are V-shaped, seen in a plane perpendicular to the axis of rotation, and have an obtuse bottom angle.

In one embodiment the recesses along the periphery of the turning wheel are alternately a deep recess and a shallow recess. This embodiment is suited for the manufacture of traditional two-layer sandwich cookies.

The supplying means comprise preferably an accumulating path, in which the cookies are advanced towards the turning wheel by a limited force.

In a practical embodiment the means for placing the cookies on top of each other to form sandwich cookies comprise a transport path for a row of cookies in a first level and a second transport path in parallel with the first transport path and ending above the first transport path in a second level, joining carriers for advancing cookies on the first transport path, and a lifting means for lifting cookies up onto the second transport path, the joining carriers for advancing the cookies on the first path also advancing the cookies on the second transport path in such a manner that two cookies are advanced substantially vertically above one another and are joined, when the cookie on the second transport path is pushed over its end. In this connection, the lifting means may comprise a wheel below the first transport path and rotating about a horizontal axis perpendicular to the transport direction, said wheel comprising one or more cams engaging and lifting cookies up unto the second transport path.

The invention will now be explained in detail in the following by means of an example of an embodiment with reference to the schematic drawings, in which
Fig. 1 is a lateral view of an apparatus according to the invention, Figs 1a and 1b being a divided figure, in which Fig. 1a shows the left part of the figure, and Fig. 1b shows the right part of the figure,
Fig. 2 is a top view of the plant in Fig. 1, Figs 2a and 2b being a divided figure, in which Fig. 2a shows the left part of the figure, and Fig. 2b shows the right part of the figure,
Figs. 3.1-3.6 illustrate the function of an indexing device according to the invention, and
Figs. 4.1-4.6 illustrate the functioning of a lifting means according to the invention.

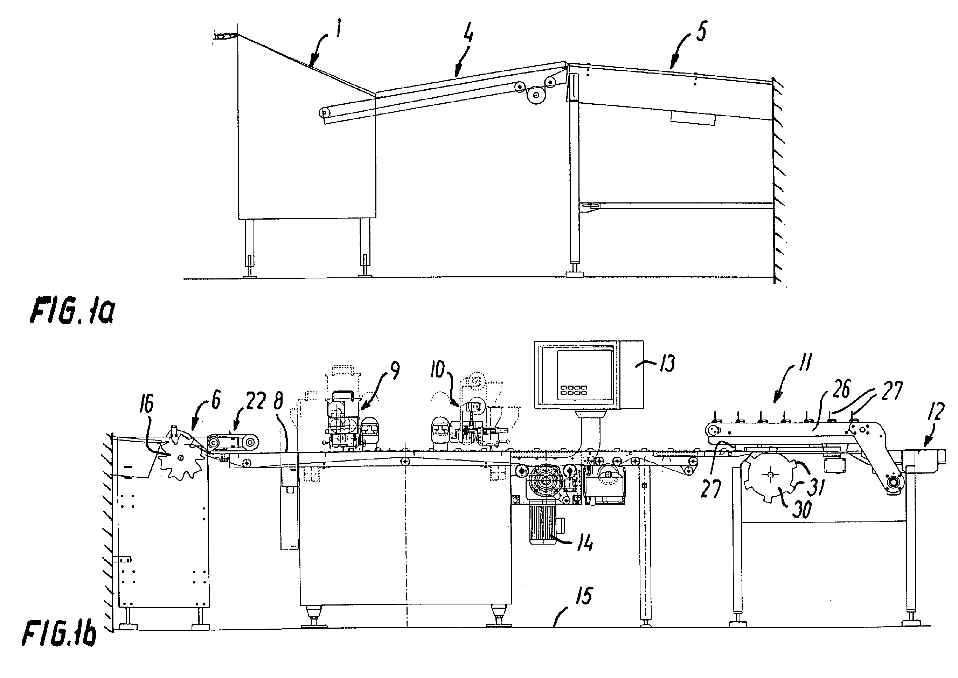

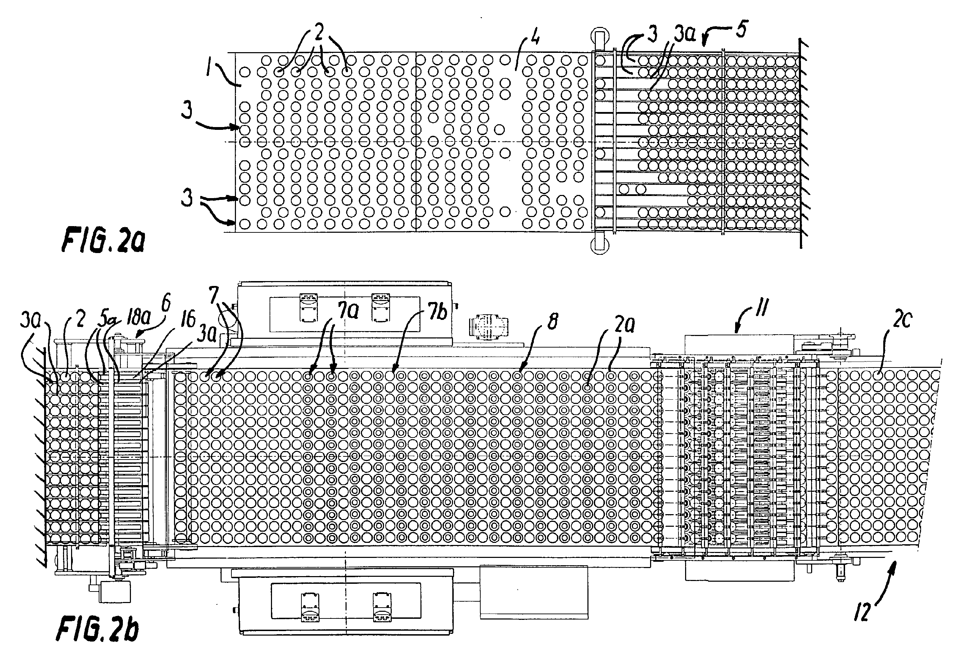

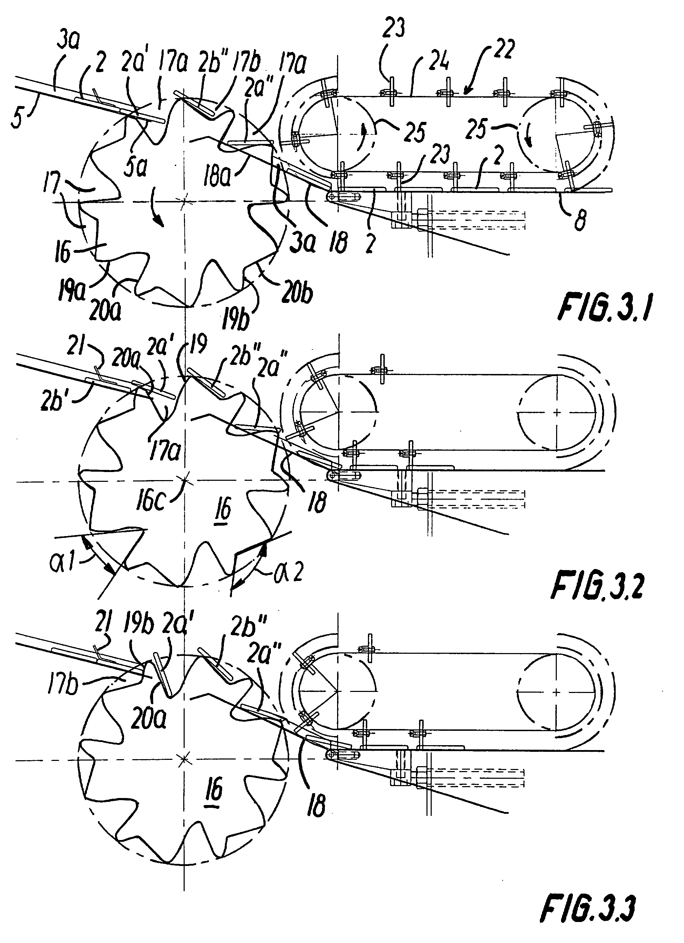

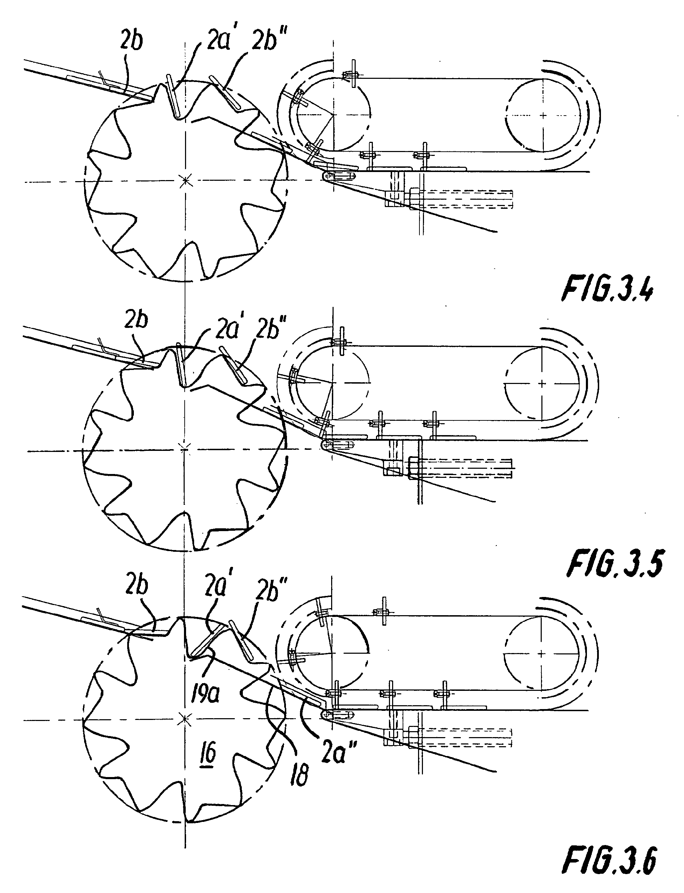

The apparatus shown in Figs 1 and 2 comprises, seen from the left of the figures, a so-called dribble board 1, which receives a flow of cookies 2 from an oven not shown. The flow of cookies is distributed over a certain width and substantially in a series of parallel rows 3. The downward sloping dribble board 1, which is of a construction known per se, has the function of arranging the cookies in parallel rows 3. An upwards tilted belt conveyor 4 carries the cookies 2 now arranged in rows 3 to an accumulating table 5, which accumulates the cookies 2 in a kind of buffer store in such a manner that a succeeding indexing device 6 simultaneously may convey a cookie 2 from each row 3. The accumulating table 5 comprises in the example of the embodiment a construction known per se, viz. a downward sloping air table, i.e. a table, through which air is blown for the formation of an air cushion under the cookies. Thereby, the cookies 2 slide with very little friction down the accumulating table 5 and are thus advanced by a limited force towards the indexing device 6.

The indexing device 6, the construction of which will be described in detail in the following, turns in the embodiment shown every second cookie 2 in the rows 3 such that through the apparatus, lines 7 of cookies 2 are guided with the bottom facing alternately upwards and downwards.

The indexing device 6 delivers synchronized lines 7 of cookies 2 to a depositor conveyor 8, which takes the lines 7 below to controllable, movably mounted depositor devices 9 and 10 (not shown in Fig. 2) of a type known per se, for application of material or filling, like for instance icing, custard, chocolate, jelly or other material known to be applied to cookies or to be placed in sandwich cookies. As will be seen from the figures, each second line 7a is provided with filling from the depositor device 9. In these lines 7a the cookies 2a are turned upside down.

From the accumulation table 5 to the depositor conveyor 8 the cookies 2 are kept in their respective rows 3 by partition walls 3a between the rows.

The depositor conveyor 8 conveys the lines 7 to the joining device 1, the construction of which will be explained in detail in the following. The joining device 11 lifts the lines 7b, to which filling has not been applied, conveys the other lines 7a below the first lines 7b, and conveys them synchronously further on to let the first lines 7b slide down upon the second lines 7a, whereby the lines 7a and 7b, when leaving the joining unit 11, have been joined to the desired sandwich cookies 2c, which on an outlet conveyor 12 are conveyed away for packing.

The apparatus is, in addition to the components mentioned here, provided with guide units 13, motors 14, etc., which will be obvious for the one skilled in the art. The various components are provided with legs and stand on a floor 15.

The indexing device 6 will now be explained in detail with reference to Figs 3.1-3.6.

The indexing device 6 comprises a turning wheel 16 with recesses 17 for receiving cookies 2 from the accumulating table 5 and transporting them to a slide 18, onto which they are delivered. Every second recess 17a is comparatively deep and turns the cookie 2a during transport, whereas the remaining recesses 17b are comparatively shallow and transport the cookie 2b without turning it.

The turning wheel 16 has an axis of rotation 16c, which extends perpendicularly to the planes of Figs 1 and 3. The deep recesses 17a have a general V-shape with an acute bottom angle α1, and the flat recesses 17b have a general V-shape with an obtuse bottom angle α2.

The width of the turning wheel 16 is sufficient for the cookies 2 to be handled safely by the turning wheel, but is substantially smaller than the width of the cookies 2 to be handled. The accumulating table 5 and the slide 18 are provided with fingers 5a and 18a, respectively, which extend along the sides of the turning wheel 16, whereby these fingers 5a, 18a may support a cookie 2 at its sides simultaneously with the turning wheel 16 supporting the center of the cookie in such a manner that the cookies 2 may by transferred gently from the fingers 5a to the turning wheel 16 and from there to the fingers 18a.

Fig. 3.1 shows a cookie 2b" in a recess 17b and two cookies 2a' and 2a", the front one of which 2a", relative to the transport direction, from the left to the right in the figures, being positioned in a recess 17a, whereas the rear cookie 2a' is on its way into another recess 17a. The rear cookie 2a' has thus slid via the accumulating table 5 to a foremost side-wall 19a (Fig. 3.2) of the V-shaped recess 17a, which serves as a stop for the cookie. The turning wheel 16 rotates at an even speed clockwise as seen in the figures, and the cookie 2a' follows the foremost sidewall 19a. At the point of time shown in Fig. 3.1. the cookie 2a' is contacted by the outermost part of the rearmost sidewall 20a of the recess 17a, and the rear end of the cookie is lifted, as will be seen from fig. 3.2. Due to the fact that only the rear end of the cookie 2a' is lifted at that time, the cookie becomes top-heavy and its front edge falls down into the bottom of the recess 17a, and the cookie 2a' gets into abutment on the interior part of the rearmost sidewall 20a, which will be seen from Fig. 3.3. During the further rotation of the turning wheel 16 the cookie 2a' is turned to a more vertical position (Figs. 3.4 and 3.5) to get at a time top-heavy and falling forwards into abutment against a foremost sidewall 19 (Fig. 3.6).

The cookie 2a' now reaches the position shown in Fig. 3.1 as the foremost cookie 2a", in which the bottom edge of the cookie, which on the accumulating table was the foremost one, but which is now the rear one, has just got in contact with the fingers 18a of the slide 18. By the further rotation of the turning wheel 16 the cookie 2a" is placed on the slide 18 and slides down (Figs 3.2-3.5).

Following the lifting of the cookie 2a' at its rear edge (Fig. 3.2) the next cookie 2b' on the accumulating table 5 may advance, pushed by the cookies being present behind. A rail 21 is placed transversely to the accumulating table 5 and prevents a cookie 2b from being lifted, when the rear edge of a preceding cookie 2a is being lifted by the turning wheel 16. The cookie 2b' slides forwards until it gets in contact with the foremost sidewall 19b of a shallow recess 17b in the same way as the cookie 2a' got in contact with the sidewall 17a. However, the cookie 2b' will be the first to be lifted at its front edge (Fig. 3.5) on account of small depth of the recess 17. This causes the cookie 2b' to be guided through a path as illustrated by Figs 3.6, 3.1-3.6, the cookie being transferred to the number of positions shown by 2b". Shortly after the point of time shown in Fig. 3.6, the cookie 2b" contacts the fingers 18a of the chute 18 by its front edge and slides down the chute 18 without being turned like the cookie 2a.

The indexing device 6 comprises in addition to the turning wheel 16 a carrier conveyor 22 placed partially above the depositor conveyor 8. The carrier conveyor 22 is provided with carriers 23 on a belt 24, which is taken over rollers 25, one of which is driven anticlockwise seen in the figures, such that the carriers 23 at a lower extension of the belt 24 are guided from the slide 18 over the depositor conveyor 8. The respective carriers 23 act as a stop for a cookie 2, which comes down the slide 18 while pushing a preceding cookie 2 forwards on the depositor conveyor 8.

The depositing or application of filling on the cookies 2a turned takes place in a manner known per se.

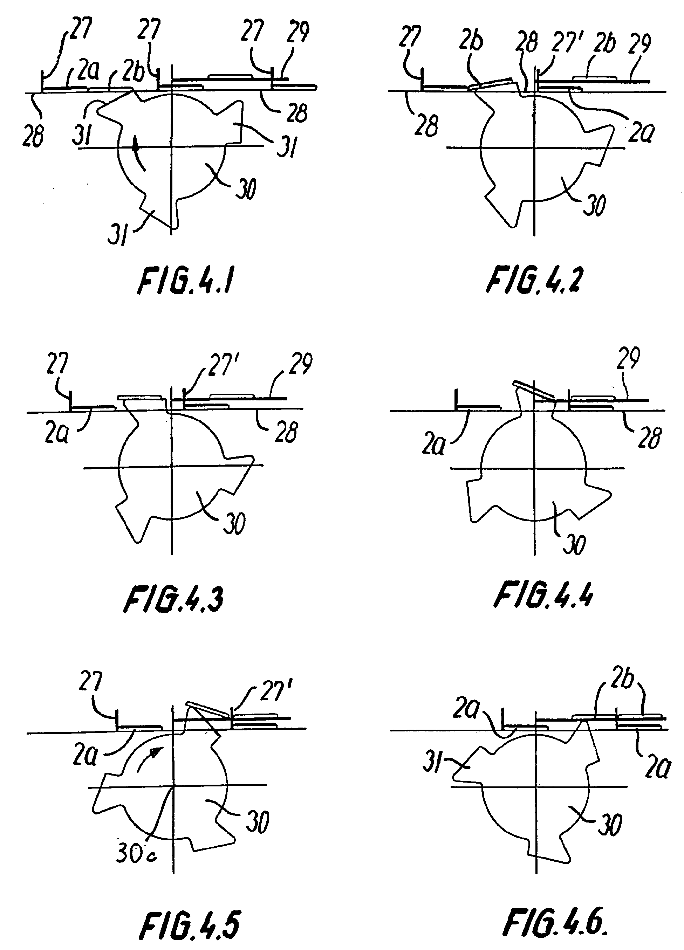

The joining device 11 comprises a superjacent carrier conveyor 26, which is of mainly the same type as the carrier conveyor 22 and has carriers 27 extending down from a lower run of a guiding mechanism not shown in detail. The joining device 11 further comprises a first sliding path 28 positioned in extension of a the depositor conveyor 8, and a second, upper sliding path 29, which is positioned vertically above and in parallel with the first sliding path 28. Finally, the joining device 11 comprises a lifting wheel 30 with lifting tappets 31. The lifting wheel 30 has an axis of rotation 30c extending perpendicularly to the plane of Figs 1 and 4 and rotating clockwise. It should be understood that the sliding paths 28 and 29 are formed by narrow members, like for instance wire, for which reason the lifting tappets 31 may protrude up through the sliding paths 28 and 29, the lifting wheel 30, like the turning wheel 16, having sufficient width for carrying the cookies 2 safely, said width being substantially smaller than the width of the cookies, such that the members of the sliding paths may carry the cookies by their side edges.

It should be noted that the lifting wheel 30 in Figs 4.1-4.6 is shown with three lifting tappets 31, whereas in Fig. 1 a lifting wheel with bigger diameter and six lifting tappets is shown. However, the two lifting wheels function in the same manner as follows:

The cookies 2 are pushed by the depositor conveyor 8 and by the carrier 27 into a first sliding path 28. Only the cookies 2a provided with a filling are engaged and pushed by a carrier 27. Concurrently with the cookies being pushed in over the lifting wheel 30, a lifting tappet 31 is turned up under a cookie 2b lifting it up to the upper sliding path 29 (Figs 4.1-4.4). The cookie 2b is pushed along the upper sliding path 29, but is braked by the preceding carrier 27' (Fig. 4.5) and gets to rest on the upper sliding path 29 (Fig. 4.6). In the meantime, the succeeding cookie 2a has been pushed by the carrier 27 down the lower sliding path 28, the cookie 2a having passed the lifting wheel 30 without being touched thereby. When the carrier 27, which pushed the cookie 2a, reaches the cookie 2b lying awaiting on the upper sliding path 29, the carrier 27 will also engage this cookie 2b and push the two cookies along vertically above one another. The upper cookie 2b is pushed out over the end of the upper sliding path 29 and falls down to the lower cookie 2a, a sandwich cookie being thus formed.

It should be understood that even though the invention has been explained here with reference to a single row of cookies, the parallel rows of cookies shown in Fig. 2 will be treated synchronously, as already known per se.

It should be understood that the embodiment described above is an example only and that the scope of the invention is defined in the succeeding claims and that variations may be made within the scope of these claims. A turning wheel may for instance be used, which does not turn every second, but every third or fourth cookie with a view to manufacturing sandwich cookies with more layers of cookies than two. The apparatus described has moreover the advantage that a simple exchange of the turning wheel by a wheel, which does not turn any of the cookies, and removal of the lifting wheel allow decoration of cookies not yet joined, or quite simply allows the cookies to pass untreated through the plant.

## Claims

1. A method for the manufacture of sandwich cookies (2c) comprising a number of preferably identical cookies (2a, 2b) placed on top of each other with a material in between,
in which a row (3) of cookies (2) are advanced with an upwards or downwards facing bottom to an indexing device (6), which transfers the cookies (2) in an arranged order to a depositor conveyor (8), which conveys the cookies (2) past a depositor device (9, 10) applying a material to at least some of the cookies (2a), following which some of the cookies (2b) are placed on top of other cookies (2a), to which a material has been applied, in order to form sandwich cookies (2c), **characterized in that** the indexing device (6) turns some of the cookies (2a) and leaves other cookies (2b) to pass without being turned in such a manner that the cookies (2a), which are intended to be positioned at the bottom of a sandwich, leave the indexing device (6) upside down, and the cookies (2b) intended to be on top of a sandwich leave the indexing device (6) bottom down.

2. A method according to claim 1 **characterized in that** the indexing device (6) receives a flow of cookies (2) in a row (3), which is advanced by a limited force, that the indexing device (6) lifts the arriving cookies (2) one by one and take them through a curved path to a receiving conveyor (18) in the form of a slide or a running conveyor for further conveyance.

3. A method according to claim 2, **characterized in that** the cookies on the receiving conveyor (18) are engaged by indexing carriers (23), which adjust the positioning of the cookies on the depositor conveyor (8).

4. A method according to claims 1-3, **characterized in that** a cookie (2b), which is to be placed on top of another cookie (2a), is lifted from a joining conveyor (28) and taken in its transport direction to a path (29) superjacent the joining conveyor and is engaged by a joining carrier (27), which also engages a succeeding cookie (2a), to which a material has been applied, whereby these two cookies are advanced vertically above one another to the end of the superjacent path (29), where the upper one of the two cookies falls down unto the subjacent one.

5. An apparatus for the manufacture of sandwich cookies consisting of a number of preferably identical cookies (2) placed on top of each other with a material in between, comprising
a feeding device (1, 4, 5) for a row (3) of cookies (2) having an upwards or downwards facing bottom, an indexing device (6) transferring the cookies in arranged order to a depositor conveyor (8) for bringing the cookies past a depositor device (9, 10) for applying a material to at least some of the cookies (2a), and means (11) for placing some of the cookies on top of other cookies, to which a material has been applied, to form sandwich cookies, **characterized in that** the indexing device (6) is adapted to turn some of the cookies (2a) and let other cookies (2b) pass without being turned in such a manner that the cookies (2a), which are intended to be at the bottom of a sandwich, leave the indexing device upside down and the cookies (2b), which are intended to be on top of a sandwich, leave the indexing device bottom down.

6. An apparatus according to claim 5, **characterized in that** the indexing device (6) comprises a turning wheel (16) with an axis of rotation (16c) and a direction of rotation and peripheral recesses (17) comprising a number of first recesses (17a) for receiving cookies (2a), whereby said cookies are turned, and a number of recesses (17b) for receiving cookies (2b), whereby said cookies are not turned, but pass the turning wheel (16) orientated as when they were received.

7. An apparatus according to claim 6, **characterized in that** the recesses (17a), which turn the cookies, are comparatively deep, and the recesses (17b), which do not turn the cookies, are comparatively shallow.

8. An apparatus according to claim 6 or 7, **characterized in that** the turning recesses (17a) are V-shaped, seen in a plane perpendicular to the axis of rotation (16) and has an acute bottom angle (α1).

9. An apparatus according to claims 6-8, **characterized in that** the recesses (17b), which do not turn the cookies, are V-shaped, seen in a plane perpendicular to the axis of rotation (16) and has an obtuse bottom angle (α2).

10. An apparatus according to claims 6-9, **characterized in that** the recesses (17) along the periphery of the turning wheel (16) are alternately a deep recess or a shallow recess.

11. An apparatus according to claims 5-10, **characterized in that** the supplying means comprise an accumulation path (5), in which the cookies are advanced towards the turning wheel (16) by a limited force.

12. An apparatus according to claims 5-11, **characterized in that** the means (11) for placing the cookies on top of each other to form sandwich cookies comprise a transport path (28) for a row of cookies in a first level and a second transport path (2) in parallel with the first transport path (28) and ending above the first transport path in a second level, joining carriers (27) for advancing cookies on the first transport path, and a lifting means (30, 31) for lifting cookies (2b) up unto the second transport path, the joining carriers (27) for advancing the cookies on the first path (28) also advancing the cookies on the second transport path (29) in such a manner that two cookies are advanced substantially vertically above one another and are joined, when the cookie on the second transport path is pushed over its end.

13. An apparatus according to claim 12, **characterized in that** the lifting means comprises a wheel (30) below the first transport path (28) and rotating about a horizontal axis (30c) perpendicular to the transport direction, said wheel (30) comprising one or more tappets (31) engaging and lifting cookies (2b) up onto the second transport path (29).
